# EUROPEAN PATENT SPECIFICATION

(11) **EP 4 513 360 B1**
(45) Date of publication and mention of the grant of the patent: **28.10.2026**
(21) Application number: 24192401.8
(22) Date of filing: 01.08.2024
(51) Int. Cl.: G06F 18/23213, G10K 11/178, G06N 3/08, G06N 3/045, G06F 18/2413, G06N 3/088, G06N 3/0455

(54) **LEARNING ROAD CONDITION REPRESENTATION FOR ACTIVE ROAD NOISE CANCELLATION**
ERLERNEN DER STRASSENZUSTANDSDARSTELLUNG ZUR AKTIVEN STRASSENGERÄUSCHUNTERDRÜCKUNG
APPRENTISSAGE DE REPRÉSENTATION D'ÉTAT DE ROUTE POUR ANNULATION ACTIVE DE BRUIT DE ROUTE

(30) Priority: 24.08.2023 US 202363578448 P; 22.07.2024 US 202418779995
(43) Date of publication of application: 26.02.2025
(73) Proprietor: Analog Devices, Inc., Wilmington, MA 01887 (US)
(72) Inventor: WACKS, Steven, Wilmington, 01887 (US)
(74) Representative: Horler, Philip John

(56) References cited:
- EP-A1- 3 534 361
- KR-A- 20230 099 748
- US-A1- 2021 341 911
- BARBARA CUNHA ET AL: "A Review of Machine Learning Methods Applied to Structural Dynamics and Vibroacoustic", ARXIV.ORG, CORNELL UNIVERSITY LIBRARY, 201 OLIN LIBRARY CORNELL UNIVERSITY ITHACA, NY 14853, 20 July 2023 (2023-07-20), XP091567875, DOI: 10.1016/J.YMSSP.2023.110535

## Description

### CLAIMS FOR PRIORITY

This patent application claims the benefit of priority U.S. Provisional Patent Application Serial Number 63/578,448, titled "LEARNING ROAD CONDITION REPRESENTATION FOR ACTIVE ROAD NOISE CANCELLATION," filed on August 24, 2023.

### TECHNICAL FIELD

The present disclosure generally relates to parameter tuning of noise cancellation systems, in particular active noise cancellation for vehicles.

### BACKGROUND

Noise in vehicle cabins can be problematic as it can cause driver fatigue as well as impede entertainment and voice-controlled devices. Vehicle cabin noise can be more pronounced in electric vehicles because electric vehicles do not have an engine to mask some of the noise.

Noise cancellation (also referred to as road noise cancellation) can suppress noise in a vehicle cabin using certain filtering techniques. Sources of noise in a vehicle cabin can include road noise from suspension and tire-road contact, which is typically relatively low-frequency. Other sources of noise include engine noise, which is typically narrowband, and weather-related noise, such as wind, rain, etc. Different sources and combinations of noise can require different filter configurations. Latency can become an issue when dealing with conventional noise cancellation techniques, especially when the vehicle moves to different environment (road) conditions, and the noise cancellation system is slow to react to the change in conditions.

EP 3534361 A1 describes applying a set of road noise cancellation parameters to a road noise cancellation system in a vehicle traveling from a first road surface type to a second road surface type, the set being associated with a vehicle type, a tire type, a road surface type, or a vehicle location. The system and method collects and compares data with the set of road noise cancellation parameters in a database to identify when the vehicle has traveled from a first road surface type to a second road surface type and, upon identifying the vehicle has traveled from a first road surface type to a second road surface type, applies the adjusted set of road noise cancellation parameters in the database that optimize the road noise cancellation system for the second road surface type.

### SUMMARY

Disclosed herein is a method as defined in claim 1.

Also, disclosed herein is a system as defined in claim 9.

Further, disclosed herein is a machine-readable storage medium as defined in claim 15.

### BRIEF DESCRIPTION OF THE DRAWINGS

Various ones of the appended drawings merely illustrate example embodiments of the present disclosure and should not be considered as limiting its scope.
FIG. 1 illustrates a block diagram of example portions of an active noise cancellation system.
FIG. 2 illustrates an example output of an encoder on a history of reference data.
FIG. 3 illustrates an example mechanism for dynamically loading taps based on reference/noise condition.
FIG. 4 illustrates an example of a parameter gradient search for a step size parameter.
FIG. 5 shows an example of results of encoding different windows of reference signal data into a 2D latent space.
FIG. 6 shows a block diagram of example portions an architecture for an active noise cancellation system.
FIG. 7 shows example portions of the sample-rate adaptive filtering component.
FIG. 8 illustrates a flow diagram for a method for active noise cancellation technique with coarse and fine tuning.
FIG. 9 illustrates an example of points being classified in different cluster groups.
FIG. 10 illustrates a set of results of an example using the active noise cancellation techniques.
FIG. 11 illustrates a block diagram of an example comprising a machine upon which any one or more of the techniques (e.g., methodologies) discussed herein may be performed.

### DETAILED DESCRIPTION

Improved active noise cancellation techniques are described herein. The techniques use an encoder to compress current reference conditions to a lower-dimensional latent space vector. The techniques also store a database of latent space vectors, which are representative of previously encountered reference conditions, and associated configuration parameters, such as filter coefficients/taps. Hence, when a vehicle transitions to a different condition (e.g., road condition) from a current condition, the system can match it with a previously encountered condition and quickly load corresponding configuration parameters for active noise cancellation. These techniques can therefore offer improved active noise cancellation, especially during transition from one noise condition to another.

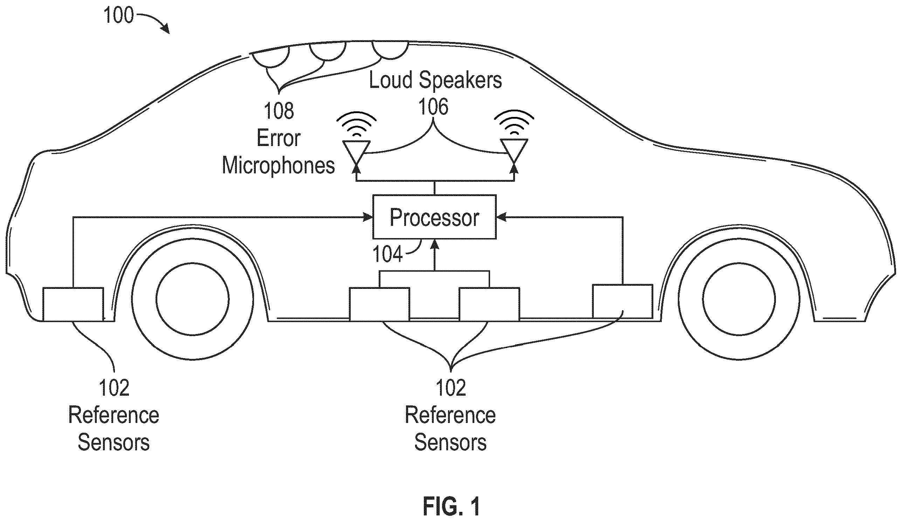

FIG. 1 illustrates a block diagram of example portions of an active noise cancellation system 100 (also referred to as active road noise cancellation system). The active noise cancellation system 100 can be provided inside a vehicle as shown. The active noise cancellation system 100 includes a plurality of reference sensors 102, a processor 104 (e.g., digital signal processor (DSP)), a plurality of loudspeakers 106, and a plurality of error microphones 108.

The reference sensors 102 may be provided as accelerometers placed near the wheels of the vehicle. The reference sensors 102 can sense vibrations that may be correlated with the road noise that passes into the vehicle cabin. In some embodiments, four reference sensors 102 may be provided, one reference sensor (e.g., accelerometers) for each wheel of the vehicle. In some examples, each reference sensor 102 may include three axes, generating twelve channels of reference signals.

The processor 104 may be provided as one or more microprocessors, such as digital signal processors (DSPs). The processor 104 may receive the reference signals from the reference sensors 102 and may generate an anti-noise signal based on the reference signals. The anti-noise signal may be 180° out of phase with the detected noise waves from the reference signals so that the anti-noise signal destructively interferes with the detected noise waves to cancel the noise in the vehicle cabin. The anti-noise signal may be transmitted to the loudspeakers 106, which may output the anti-noise signal. The error microphones 108 may detect the noise level in the vehicle and may transmit information to the processor 104 in a feedback loop to modify the noise cancellation accordingly.

In some examples, the processor 104 may utilize an adaptive filtering technique to incrementally converge to an estimate of the anti-noise to play out the loudspeaker. Conventional systems can use adaptive filtering to incrementally converge to an estimate of the optimal anti-noise to play out the loudspeaker. Different road conditions can use different sets of adaptive filter taps and other configuration parameters. In conventional systems, each time the vehicle encounters a different road condition, adaptive filter convergence takes seconds to minutes, during which time noise suppression is suboptimal.

The noise cancellation techniques described herein reduce this latency issue and improve noise cancellation. The techniques described herein train an encoder to learn low-dimensional "latent space" representations of reference signals, which allow the system to recognize previously seen reference conditions and load previously converged adaptive filter taps and other configuration parameters. These techniques, for example, can provide appreciable improvement (e.g., at least 3-5 dB) to noise cancellation performance in dynamically changing conditions.

The encoder can transform reference signals (from reference sensors as described above) from a high-dimensional space (the raw or preprocessed accelerometer data) to a low-dimensional "latent" space. The encoder may be provided as a neural network.

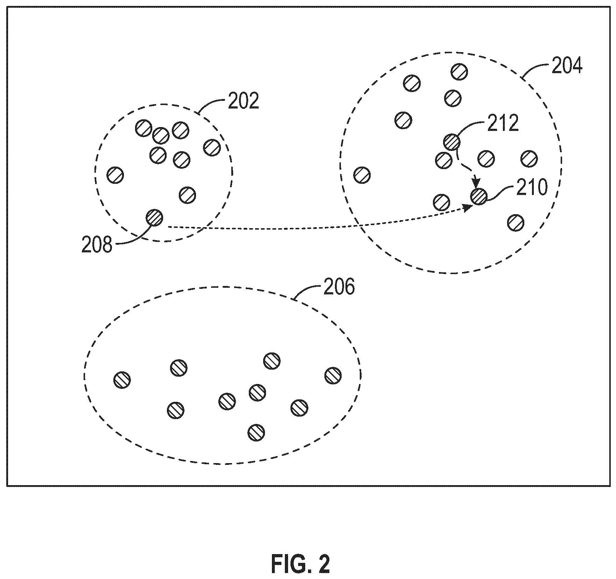

FIG. 2 illustrates an example output of an encoder on a history of reference data. A scatter plot of data points in a 2D latent space encoding of reference signals is shown. The different set of points can be classified as clusters, where respective clusters represent different reference conditions. Clusters 202, 204, 206 correspond to samples from different road conditions. Here, points in clusters 202, 204, 206 correspond to samples seen from three different reference conditions, respectively. The encoder can transform new windows of reference data as new windows become available into a point in the latent space (e.g., every 200 ms). The system can detect large jumps in this latent space corresponding to road condition changes and load previously saved taps (associated with black points) from a database. In some examples, the previously saved taps may correspond to centers of the respective clusters. The databases may be user/car specific. That is, car A may build its database based on noise conditions encountered during use, and car B (which may be the same or different model car as car A) may build its database based on noise conditions encountered during use.

The system can detect a jump in the latent space, in this example from the cluster 202 to the cluster 204. This jump triggers the system to load a set of adaptive filter taps that were saved when previously in the "red" region of the latent space. That is, previously the system may jump from point 208 directly to point 210. However, the system can detect a jump from cluster 202 to cluster 204, and the system can load previously saved tap 212 (here, the center of cluster 204). The jump is then from point 212 to point 210. This jumping technique provides faster convergence and better cancellation than if the adaptive filter (e.g., Filtered Least Mean Squared (FxLMS)) performs gradient descent starting from the blue region of the latent space.

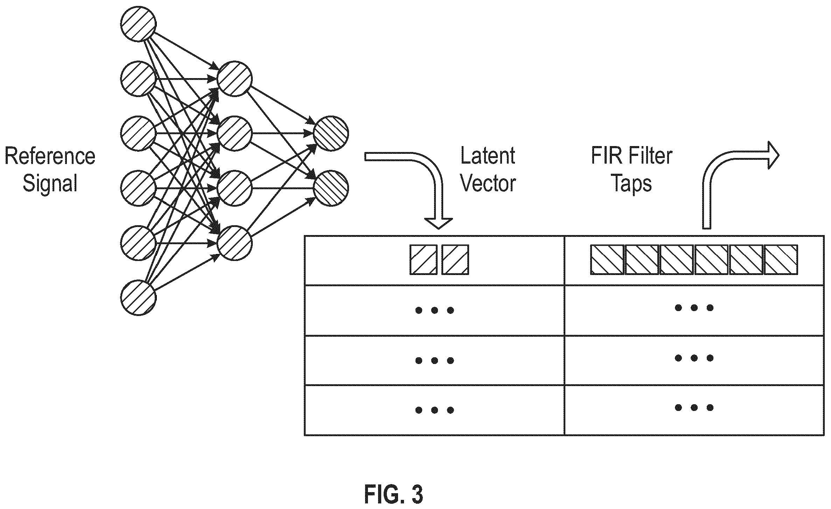

FIG. 3 illustrates an example mechanism for dynamically loading taps based on reference/noise condition. A {key, value} dictionary is used to associate adaptive filter taps (values) or other configuration parameters to corresponding latent vectors (the keys). The encoder computes a latent vector, which is used to query a database of filter taps that is accumulated online while the system is running. When a jump in the latent space is detected, the system can compare the current latent space position to available keys in the dictionary and select the taps corresponding to the closest latent vector. If no sufficiently close vector exists, the system can simply continue with its default behavior.

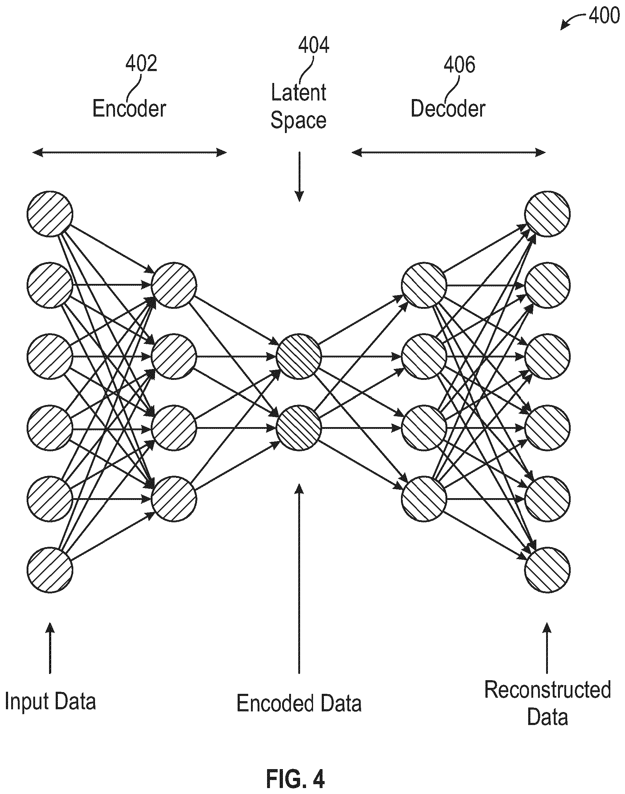

The encoder can be trained offline in advance as part of an autoencoder-based neural network architecture. FIG. 4 illustrates example portions of an architecture of an autoencoder 400. The autoencoder includes an encoder 402, latent space 404, and a decoder 406. The input and output of the autoencoder 400 are both in the same high-dimensional space. The autoencoder 400 is trained to reconstruct the input signal at the output layer. In the middle layer of the network is a smaller, low-dimensional layer that acts as a "bottleneck" and is forced to retain only the important information needed to reconstruct as much of the high-dimensional signal as possible. The autoencoder can be interpreted as a combined encoder 402 and decoder 406, and after training, the encoder 402 can be run in isolation to transform samples from the input space to the latent space.

One of the major benefits of the autoencoder approach is unsupervised training. Most machine learning today uses supervised training, where a label (either a class ID in a classification problem or a target value in a regression problem) is required for each training data sample. With unsupervised training, the system uses a variety of unlabeled data, which the autoencoder learns to compress. Labelling data is expensive, time-consuming, and error prone, so the ability to use unsupervised learning can be advantageous. Additionally, the system can elegantly handle unseen road conditions. When the system observes new latent space samples in a region where there is little or no data, and the system adds this information to the database accordingly.

As mentioned above, the encoder can be programmed offline in advance of deployment in a vehicle. Encoders can be car specific. For example, different car models for the same car manufacturer may have respective trained encoders. That is, car model A can include trained encoder 1, car model B can include trained encoder 2, and so on.

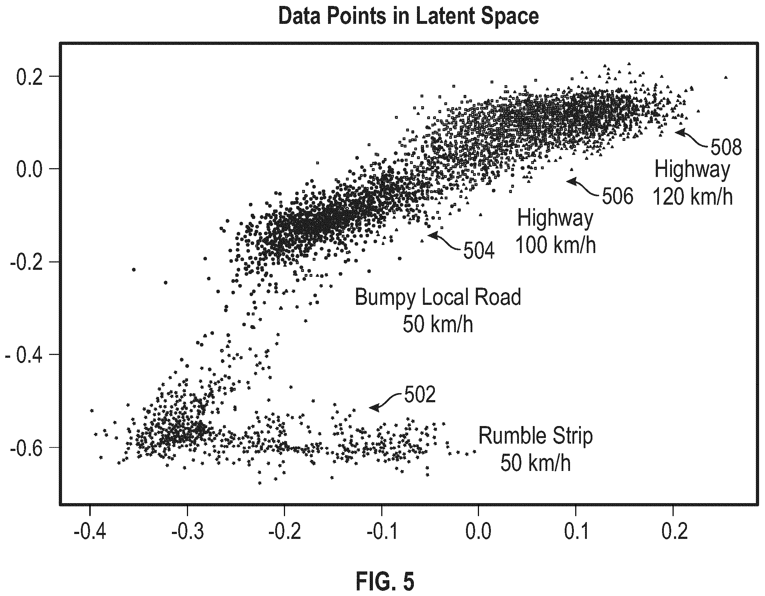

FIG. 5 shows an example of results of encoding different windows of reference signal data into a 2D latent space. The dataset includes four groups 502, 504, 506, 508 corresponding to four different road conditions. These datasets are coarsely labelled for illustration purposes because the algorithm is not using the labels, as described above. In this example, group 502 may correspond to the vehicle driving on a rumble strip at 50km/h. Group 504 may correspond to the vehicle driving on bumpy local road at 50 km/h. Group 506 may correspond to the vehicle driving on a highway at 100 km/h. Group 508 may correspond to the vehicle driving at 120 km/h. This plot shows a successful result where different samples of the same or similar road conditions end up clustered close together, while the different road condition clusters occupy distinct regions in the latent space separated from each other.

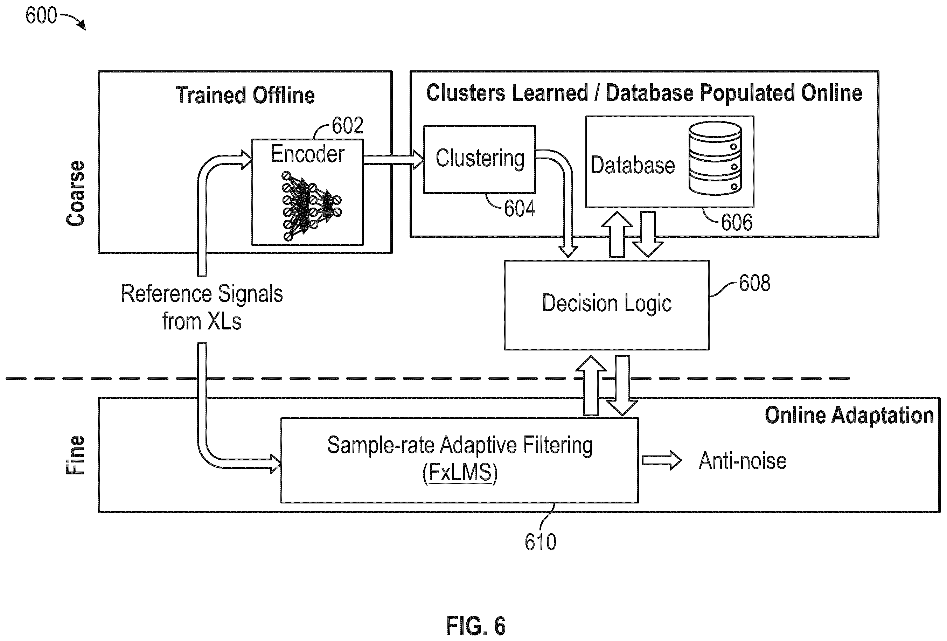

FIG. 6 shows a block diagram of example portions an architecture 600 for an active noise cancellation system. As shown, the architecture 600 includes a coarse-tuning section and a fine-tuning section. Reference signals may be received by the architecture. An encoder 602, which has been trained offline as described above, may compress the higher dimensional reference signals to lower dimensional latent space vector. The latent space vector may represent the reference condition seen by the vehicle in the instant time window. A clustering component 604 may determine if the latent space vector data belongs in a current cluster or different cluster based on a database 606 of learned clustering information, such as a decision boundary, as described in further detail below. If the latent vector is identified as belonging to a different cluster than a current cluster, configuration properties associated for the new cluster can be retrieved from the database.

Decision logic 608 may input the retrieved configuration properties, such as filter taps/coefficients, to a sample-rate adaptive filtering component 610. The retrieved configuration parameters may be associated with values for the center of the cluster. The filtering component 610 may use the configuration properties with the new identified cluster and continue its fine tuning and generating anti-noise signals, which are played by the loudspeakers.

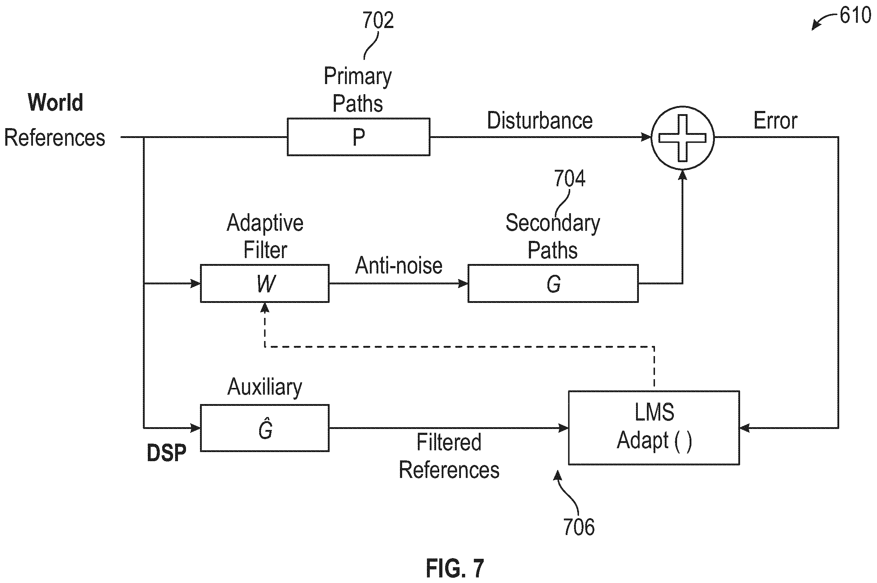

FIG. 7 shows example portions of the sample-rate adaptive filtering component 610. The sample-rate adaptive filtering component 610 (e.g., FxLMS) can receive reference signals and include a primary path 702 and secondary path 704 for generating anti-noise signals. The sample-rate adaptive filtering component 610 can also include a feedback path 706 (e.g., input received from error microphones) that can fine tune the adaptive filter components (W), such as the filter coefficients/taps.

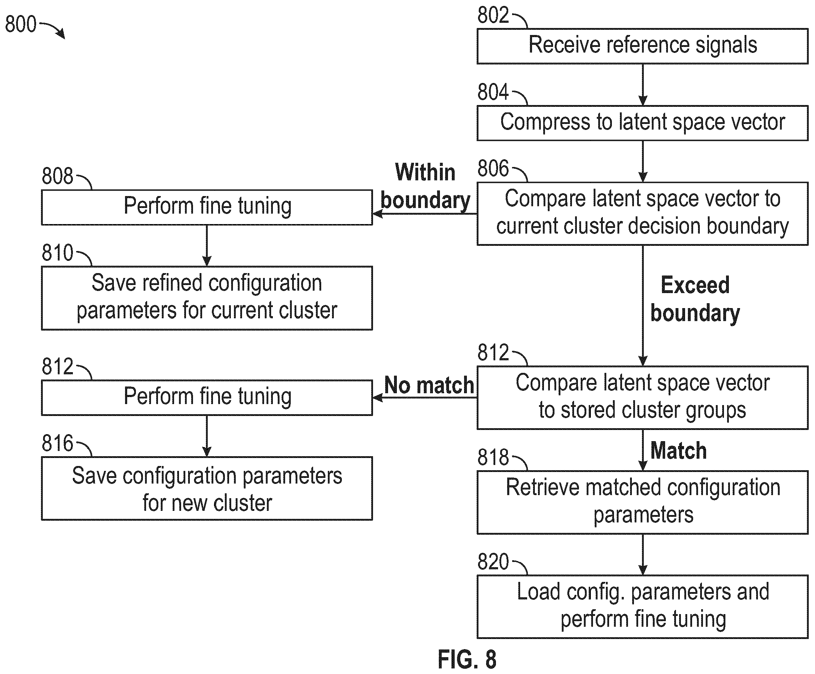

FIG. 8 illustrates a flow diagram for a method 800 for active noise cancellation technique with coarse and fine tuning, according to some examples of the present subject matter. The method 800 may be executed by one or more processors, as described above.

At operation 802, reference signals are received. The reference signals may be received from a plurality of reference sensors, as described herein. The reference signals may be sampled in respective windows (e.g., 200 ms). For example, a respective window may include thousands of samples of the reference signals sampled during the window. Thus, the reference signals may be provided in a high-dimensional space (e.g., m dimensions).

At operation 804, the reference signals are compressed to a latent space vector using an encoder, as described herein. The encoder may be trained offline, as described herein. In some examples, the encoder may continue its training during runtime operation in the vehicle. The encoder may compress the high-dimensional reference data into a low-dimensional latent space vector (e.g., n dimensions), where m is greater than n (m > n). For example, the latent space vector may be provided in two dimensions or other low dimensional values. The latent space vector may represent the reference conditions (e.g., road conditions) in the respective window.

At operation 806, the system compares the latent space vector to a decision boundary associated with a current cluster. The decision boundary may be associated with a range of values for the same or similar road previously determined and stored representative of the current reference (road) conditions, as described herein.

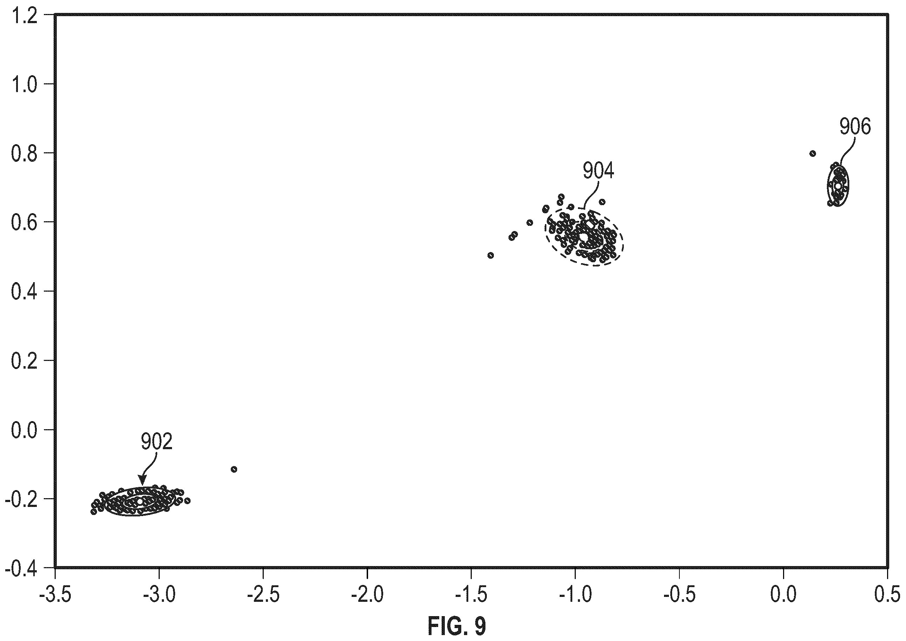

For example, a cluster may be defined by a Gaussian ellipse, where the decision boundary corresponds a standard deviation value from the center of the cluster to edge of the ellipse. FIG. 9 illustrates an example of points being classified in different cluster groups. Cluster 902, 904, 906 may be defined by a Gaussian ellipse. The decision boundaries are defined by a standard deviation from the respective centers of the clusters. Cluster 902 may correspond to a first driving condition. Cluster 904 may correspond to a second driving condition. Cluster 906 may correspond to a third driving condition.

Returning to FIG. 8, if the latent space vector is within the decision boundary, the system determines that the vehicle is still operating in the same reference/noise conditions and performs fine tuning of the active noise cancellation system, such as updating the filter coefficients of the sample-rate adaptive filtering component (e.g., FxLMS) at operation 808. Also, at operation 810, the system saves refined configuration parameters (e.g., optimized filter coefficient values based on the fine tuning) associated with the current cluster group.

If the latent space vector exceeds the decision boundary, the system compares the latent space vector to stored cluster groups representing different reference conditions previously encountered by the vehicle at operation 812.

If there is no match to a previously stored cluster group, the system performs fine tuning of the active noise cancellation system, such as updating the filter coefficients of the sample-rate adaptive filtering component (e.g., FxLMS) at operation 814. Also, at operation 816, the system saves configuration parameters (e.g., optimized filter coefficient values based on the fine tuning) associated with the latent space vector as a new cluster group.

If there is a match to a previously stored cluster group, the system retrieves the matched configuration properties (e.g., filter coefficients) associated with the matched cluster group at operation 818. That is, the system matches the current reference condition to a previously encountered reference condition. At operation 820, the system sets (or loads) configuration properties based on the retrieved configuration properties and then perform fine tuning of the active noise cancellation system, such as updating the filter coefficients of the sample-rate adaptive filtering component (e.g., FxLMS). Jumping to the retrieved configuration properties can speed up the fine tuning and thus improve the active noise cancellation by improving noise cancellation when transitioning from one condition to another.

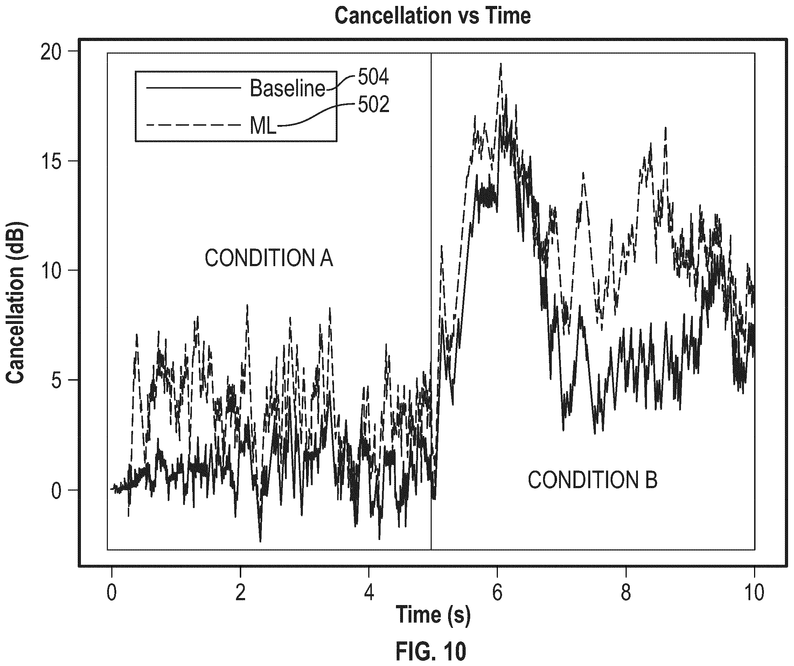

FIG. 10 illustrates a set of results of an example using the active noise cancellation techniques described herein compared to conventional techniques (baseline). Figure 10 shows the results of a run where the system stitches together five seconds of Condition A (e.g., "highway 100 km/h" road condition) with five seconds of Condition B (e.g., "rumble strip 50 km/h" road condition). The graph shows the noise cancellation over time. Plot 502 shows cancellation with the encoder-based tap loading mechanism as described herein and plot 504 shows cancellation without the techniques described herein (conventional). The plots 504, 502 show the amount of noise cancellation achieved over time under the baseline and latent space tap loading conditions, respectively. The latent space method detects Condition A at startup and Condition B after the change and loads filter taps for each condition. The system finds previously converged taps that are nearby in latent space after the first window of reference data as well as after the road condition change (detected by a large jump in latent space). This allows the system to achieve at least 3-5 dB of cancellation improvement, which would provide significant benefit to the user.

As mentioned above, different configuration parameters may be loaded based on matching to previously encountered reference condition. For example, step size of the active noise cancellation system can be loaded based on the matching. In some examples, the active noise cancellation may be suspended based on the matching. For example, if the system detects that the vehicle is driving on a gravel road by matching the current latent space vector to conditions for gravel road previously encountered, the system may suspend active noise cancellation. Noise cancellation may not be able to counter the significant noise from the gravel road, so the suspending the active noise cancellation may be worthwhile, for example, to prevent boosting of in-vehicle noise resulting from rock strikes near a reference sensor.

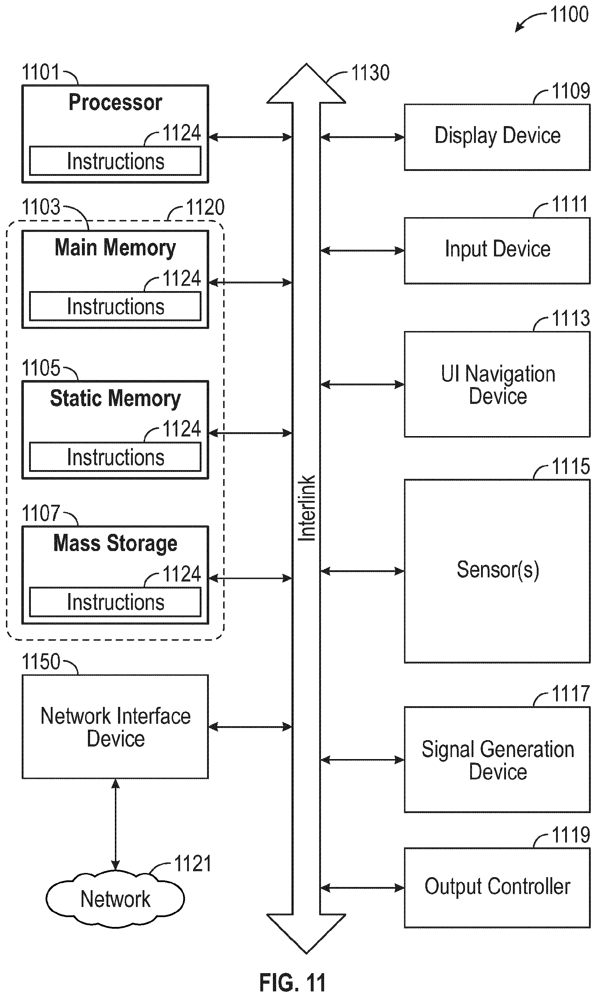

The techniques shown and described in this document can be performed using a portion or an entirety of active noise cancellation system as described above or otherwise using a machine 1100 as discussed below in relation to FIG. 11. FIG. 11 illustrates a block diagram of an example comprising a machine 1100 upon which any one or more of the techniques (e.g., methodologies) discussed herein may be performed. In various examples, the machine 1100 may operate as a standalone device or may be connected (e.g., networked) to other machines.

In a networked deployment, the machine 1100 may operate in the capacity of a server machine, a client machine, or both in server-client network environments. In an example, the machine 1100 may act as a peer machine in peer-to-peer (P2P) (or other distributed) network environment. The machine 1100 may be a vehicle head-unit / infotainment system, a vehicle electronic control unit (ECU), a personal computer (PC), a tablet device, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate by, logic or a number of components, or mechanisms. Circuitry is a collection of circuits implemented in tangible entities that include hardware (e.g., simple circuits, gates, logic, etc.). Circuitry membership may be flexible over time and underlying hardware variability. Circuitries include members that may, alone or in combination, perform specified operations when operating. In an example, hardware of the circuitry may be immutably designed to carry out a specific operation (e.g., hardwired). In an example, the hardware comprising the circuitry may include variably connected physical components (e.g., execution units, transistors, simple circuits, etc.) including a computer-readable medium physically modified (e.g., magnetically, electrically, such as via a change in physical state or transformation of another physical characteristic, etc.) to encode instructions of the specific operation. In connecting the physical components, the underlying electrical properties of a hardware constituent may be changed, for example, from an insulating characteristic to a conductive characteristic or vice versa. The instructions enable embedded hardware (e.g., the execution units or a loading mechanism) to create members of the circuitry in hardware via the variable connections to carry out portions of the specific operation when in operation. Accordingly, the computer-readable medium is communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time.

The machine 1100 (e.g., computer system) may include a hardware-based processor 1101 (e.g., a central processing unit (CPU), a graphics processing unit (GPU), a hardware processor core, or any combination thereof), a main memory 1103 and a static memory 1105, some or all of which may communicate with each other via an interlink 1130 (e.g., a bus). The machine 1100 may further include a display device 1109, an input device 1111 (e.g., an alphanumeric keyboard), and a user interface (UI) navigation device 1113 (e.g., a mouse). In an example, the display device 1109, the input device 1111, and the UI navigation device 1113 may comprise at least portions of a touch screen display. The machine 1100 may additionally include a storage device 1120 (e.g., a drive unit), a signal generation device 1117 (e.g., a speaker), a network interface device 1150, and one or more sensors 1115, such as a global positioning system (GPS) sensor, compass, accelerometer, or other sensor. The machine 1100 may include an output controller 1119, such as a serial controller or interface (e.g., a universal serial bus (USB)), a parallel controller or interface, or other wired or wireless (e.g., infrared (IR) controllers or interfaces, near field communication (NFC), etc., coupled to communicate or control one or more peripheral devices (e.g., a printer, a card reader, etc.).

The storage device 1120 may include a machine readable medium on which is stored one or more sets of data structures or instructions 1124 (e.g., software or firmware) embodying or utilized by any one or more of the techniques or functions described herein. The instructions 1124 may also reside, completely or at least partially, within a main memory 1103, within a static memory 1105, within a mass storage device 1107, or within the hardware-based processor 1101 during execution thereof by the machine 1100. In an example, one or any combination of the hardware-based processor 1101, the main memory 1103, the static memory 1105, or the storage device 1120 may constitute machine readable media.

While the machine readable medium is considered as a single medium, the term "machine readable medium" may include a single medium or multiple media (e.g., a centralized or distributed database, and/or associated caches and servers) configured to store the one or more instructions 1124.

The term "machine readable medium" may include any medium that is capable of storing, encoding, or carrying instructions for execution by the machine 1100 and that cause the machine 1100 to perform any one or more of the techniques of the present disclosure, or that is capable of storing, encoding or carrying data structures used by or associated with such instructions. Non-limiting machine-readable medium examples may include solid-state memories, and optical and magnetic media. Accordingly, machine-readable media are not transitory propagating signals. Specific examples of massed machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic or other phase-change or state-change memory circuits; magnetic disks, such as internal hard disks and removable disks; magneto-optical disks; and CD-ROM and DVD-ROM disks.

The instructions 1124 may further be transmitted or received over a communications network 1121 using a transmission medium via the network interface device 1150 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., the Institute of Electrical and Electronics Engineers (IEEE) 802.22 family of standards known as Wi-Fi^{®}, the IEEE 802.26 family of standards known as WiMax^{®}), the IEEE 802.27.4 family of standards, peer-to-peer (P2P) networks, among others. In an example, the network interface device 1150 may include one or more physical jacks (e.g., Ethernet, coaxial, or phone jacks) or one or more antennas to connect to the communications network 1121. In an example, the network interface device 1150 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 1100, and includes digital or analog communications signals or other intangible medium to facilitate communication of such software.

### Various Notes

The above detailed description includes references to the accompanying drawings, which form a part of the detailed description. The drawings show, by way of illustration, specific implementations in which the invention can be practiced. These implementations are also referred to generally as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following aspects, the terms "including" and "comprising" are open-ended, that is, a system, device, article, composition, formulation, or process that includes elements in addition to those listed after such a term in an aspect are still deemed to fall within the scope of that aspect. Moreover, in the following aspects, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. It should be noted and understood that there can be improvements and modifications made of the present invention described in detail above without departing from the scope of the invention as set forth in the accompanying claims.

## Claims

1. A method to provide active noise cancellation, the method comprising:
receiving (802) a set of reference signals representing a current reference condition for a vehicle, the set of reference signals being defined in m dimensions;
compressing (804) the set of reference signals to a latent space vector being defined in n dimensions, wherein m is greater than n;
matching (812) the latent space vector to a cluster group stored in a database, the cluster group representing a previously encountered reference condition;
retrieving (818) configuration properties associated with the matched cluster group; and
generating an anti-noise signal based on the retrieved configuration properties.

2. The method of claim 1, wherein the compressing is performed by a neural network encoder, and
wherein the neural network encoder is trained offline based on an autoencoder architecture using unsupervised training.

3. The method of claim 2, wherein the autoencoder architecture includes an encoder portion with an input layer to receive an input signal, a latent space portion to compress the input signal to generate a compressed signal, and a decoder portion with an output layer trained to reconstruct the input signal from the compressed signal.

4. The method of any preceding claim, wherein the configuration properties include filter coefficients for a sample-rate adaptive filter.

5. The method of claim 4, further comprising:
loading the filter coefficients into the sample-rate adaptive filter;
performing fine tuning of the sample-rate adaptive filter to generate modified filter coefficients based on at least one feedback error signal; and
generating the anti-noise signal based on the modified filter coefficients.

6. The method of any preceding claim, wherein the configuration properties include a step size of an active noise cancellation system.

7. The method of any preceding claim, wherein the reference signals are sampled outputs from a plurality of accelerometers in a reference window.

8. The method of any preceding claim, further comprising:
comparing the latent space vector to a decision boundary associated with a current cluster group, wherein the matching the latent space vector to the cluster group is performed in response to the latent space vector exceeding the decision boundary.

9. A system (1100) comprising:
one or more processors (1101) of a machine; and
a memory (1120) storing instructions (1124) that, when executed by the one or more processors, cause the machine to perform the following operations:
receiving a set of reference signals representing a current reference condition for a vehicle, the set of reference signals being defined in m dimensions;
compressing the set of reference signals to a latent space vector being defined in n dimensions, wherein m is greater than n;
matching the latent space vector to a cluster group stored in a database, the cluster group representing a previously encountered reference condition;
retrieving configuration properties associated with the matched cluster group; and
generating an anti-noise signal based on the retrieved configuration properties.

10. The system (1100) of claim 9, wherein the compressing is performed by a neural network encoder, and
wherein the neural network encoder is trained offline based on an autoencoder architecture using unsupervised training.

11. The system (1100) of claim 10, wherein the autoencoder architecture includes an encoder portion with an input layer to receive an input signal, a latent space portion to compress the input signal to generate a compressed signal, and a decoder portion with an output layer trained to reconstruct the input signal from the compressed signal.

12. The system (1100) of any of claims 9 to 11, wherein the configuration properties include filter coefficients for a sample-rate adaptive filter.

13. The system (1100) of claim 12, wherein the instructions, when executed by the one or more processors (1101), cause the machine to perform the following operations:
loading the filter coefficients into the sample-rate adaptive filter;
performing fine tuning of the sample-rate adaptive filter to generate modified filter coefficients based on at least one feedback error signal; and
generating the anti-noise signal based on the modified filter coefficients.

14. The system (1100) of any of claims 9 to 13, wherein at least one of the following applies:
(a) the configuration properties include a step size of an active noise cancellation system;
(b) the reference signals are sampled outputs from a plurality of accelerometers in a reference window;
(c) the instructions, when executed by the one or more processors, cause the machine to compare the latent space vector to a decision boundary associated with a current cluster group, wherein the matching the latent space vector to the cluster group is performed in response to the latent space vector exceeding the decision boundary.

15. A machine-readable storage medium embodying instructions that, when executed by a machine, cause the machine to perform the method of any of claims 1 to 8.

## Patentansprüche

1. Verfahren zum Bereitstellen einer aktiven Geräuschunterdrückung, wobei das Verfahren Folgendes umfasst:
Empfangen (802) eines Satzes von Referenzsignalen, die einen aktuellen Referenzzustand für ein Fahrzeug repräsentieren, wobei der Satz von Referenzsignalen in m Dimensionen definiert ist;
Komprimieren (804) des Satzes von Referenzsignalen zu einem Latenzraumvektor, der in n Dimensionen definiert ist, wobei m größer als n ist;
Abgleich (812) des Latenzraumvektors mit einer Clustergruppe, die in einer Datenbank gespeichert ist, wobei die Clustergruppe einen zuvor aufgetretenen Referenzzustand repräsentiert;
Abrufen (818) von Konfigurationseigenschaften, die mit der abgeglichenen Clustergruppe assoziiert sind; und
Erzeugen eines Anti-Geräuschsignals, basierend auf den abgerufenen Konfigurationseigenschaften.

2. Verfahren nach Anspruch 1, wobei das Komprimieren durch einen neuronalen Netzwerk-Encoder durchgeführt wird, und
wobei der neuronale Netzwerk-Encoder offline, basierend auf einer Autoencoder-Architektur, unter Verwendung eines unüberwachten Trainings trainiert wird.

3. Verfahren nach Anspruch 2, wobei die Autoencoder-Architektur einen Encoder-Abschnitt mit einer Eingabeschicht zum Empfangen eines Eingabesignals, einen Latenzraum-Abschnitt zum Komprimieren des Eingabesignals zum Erzeugen eines komprimierten Signals und einen Decoder-Abschnitt mit einer Ausgabeschicht, die trainiert ist, um das Eingabesignal aus dem komprimierten Signal zu rekonstruieren, einschließt.

4. Verfahren nach einem vorstehenden Anspruch, wobei die Konfigurationseigenschaften Filterkoeffizienten für einen abtastratenadaptiven Filter einschließen.

5. Verfahren nach Anspruch 4, weiter umfassend:
Laden der Filterkoeffizienten in den abtastratenadaptiven Filter;
Durchführen einer Feinabstimmung des abtastratenadaptiven Filters zum Erzeugen modifizierter Filterkoeffizienten, basierend auf mindestens einem Rückkopplungsfehlersignal; und
Erzeugen des Anti-Geräuschsignals, basierend auf den modifizierten Filterkoeffizienten.

6. Verfahren nach einem vorstehenden Anspruch, wobei die Konfigurationseigenschaften eine Schrittweite eines aktiven Geräuschunterdrückungssystems einschließen.

7. Verfahren nach einem vorstehenden Anspruch, wobei die Referenzsignale abgetastete Ausgaben aus einer Vielzahl von Beschleunigungssensoren in einem Referenzfenster sind.

8. Verfahren nach einem vorstehenden Anspruch, weiter umfassend:
Vergleichen des Latenzraumvektors mit einer Entscheidungsgrenze, die mit einer aktuellen Clustergruppe assoziiert ist, wobei das Abgleichen des Latenzraumvektors mit der Clustergruppe als Antwort darauf durchgeführt wird, dass der Latenzraumvektor die Entscheidungsgrenze überschreitet.

9. System (1100), umfassend:
einen oder mehrere Prozessoren (1101) einer Maschine; und
einen Speicher (1120), der Anweisungen (1124) speichert, die, wenn sie von dem einen oder den mehreren Prozessoren ausgeführt werden, die Maschine veranlassen, die folgenden Operationen durchzuführen:
Empfangen eines Satzes von Referenzsignalen, die einen aktuellen Referenzzustand für ein Fahrzeug repräsentieren, wobei der Satz von Referenzsignalen in m Dimensionen definiert ist;
Komprimieren des Satzes von Referenzsignalen zu einem Latenzraumvektor, der in n Dimensionen definiert ist, wobei m größer als n ist;
Abgleichen des Latenzraumvektors mit einer Clustergruppe, die in einer Datenbank gespeichert ist, wobei die Clustergruppe einen zuvor aufgetretenen Referenzzustand repräsentiert;
Abrufen von Konfigurationseigenschaften, die mit der abgeglichenen Clustergruppe assoziiert sind; und
Erzeugen eines Anti-Geräuschsignals, basierend auf den abgerufenen Konfigurationseigenschaften.

10. System (1100) nach Anspruch 9, wobei das Komprimieren durch einen neuronalen Netzwerk-Encoder durchgeführt wird, und
wobei der neuronale Netzwerk-Encoder offline, basierend auf einer Autoencoder-Architektur, unter Verwendung eines unüberwachten Trainings trainiert wird.

11. System (1100) nach Anspruch 10, wobei die Autoencoder-Architektur einen Encoder-Abschnitt mit einer Eingabeschicht zum Empfangen eines Eingabesignals, einen Latenzraum-Abschnitt zum Komprimieren des Eingabesignals zum Erzeugen eines komprimierten Signals und einen Decoder-Abschnitt mit einer Ausgabeschicht, die trainiert ist, um das Eingabesignal aus dem komprimierten Signal zu rekonstruieren, einschließt.

12. System (1100) nach einem der Ansprüche 9 bis 11, wobei die Konfigurationseigenschaften Filterkoeffizienten für einen abtastratenadaptiven Filter einschließen.

13. System (1100) nach Anspruch 12, wobei die Anweisungen, wenn sie von dem einen oder den mehreren Prozessoren (1101) ausgeführt werden, veranlassen, dass die Maschine die folgenden Operationen durchführt:
Laden der Filterkoeffizienten in den abtastratenadaptiven Filter;
Durchführen einer Feinabstimmung des abtastratenadaptiven Filters zum Erzeugen modifizierter Filterkoeffizienten, basierend auf mindestens einem Rückkopplungsfehlersignal; und
Erzeugen des Anti-Geräuschsignals, basierend auf den modifizierten Filterkoeffizienten.

14. System (1100) nach einem der Ansprüche 9 bis 13, wobei mindestens eines aus Folgendem zutrifft:
(a) die Konfigurationseigenschaften schließen eine Schrittweite eines aktiven Geräuschunterdrückungssystems ein;
(b) die Referenzsignale sind abgetastete Ausgaben einer Vielzahl von Beschleunigungssensoren in einem Referenzfenster;
(c) die Anweisungen, wenn von dem einen oder den mehreren Prozessoren ausgeführt, veranlassen, dass die Maschine den Latenzraumvektor mit einer Entscheidungsgrenze vergleicht, die mit einer aktuellen Clustergruppe assoziiert ist, wobei das Abgleichen des Latenzraumvektors mit der Clustergruppe als Antwort darauf ausgeführt wird, dass der Latenzraumvektor die Entscheidungsgrenze überschreitet.

15. Maschinenlesbares Speichermedium, das Anweisungen verkörpert, die, wenn sie von einer Maschine ausgeführt werden, veranlassen, dass die Maschine das Verfahren nach einem der Ansprüche 1 bis 8 durchführt.

## Revendications

1. Procédé pour fournir une annulation active du bruit, le procédé comprenant :
la réception (802) d'un ensemble de signaux de référence représentant une condition de référence actuelle pour un véhicule, l'ensemble de signaux de référence étant défini en dimensions m ;
la compression (804) de l'ensemble de signaux de référence vers un vecteur d'espace latent étant défini en n dimensions, dans lequel m est supérieur à n ;
la mise en correspondance (812) du vecteur d'espace latent avec un groupe de grappe stocké dans une base de données, le groupe de grappe représentant une condition de référence précédemment rencontrée ;
la récupération (818) de propriétés de configuration associées au groupe de grappe mis en correspondance ; et
la génération d'un signal antibruit sur la base des propriétés de configuration récupérées.

2. Procédé selon la revendication 1, dans lequel la compression est réalisée par un codeur de réseau neuronal, et
dans lequel le codeur de réseau neuronal est entraîné hors ligne sur la base d'une architecture d'auto-codeur utilisant un entraînement non supervisé.

3. Procédé selon la revendication 2, dans lequel l'architecture d'auto-codeur inclut une portion de codeur avec une couche d'entrée pour recevoir un signal d'entrée, une portion d'espace latent pour compresser le signal d'entrée pour générer un signal compressé, et une portion de décodeur avec une couche de sortie entraînée pour reconstruire le signal d'entrée à partir du signal comprimé.

4. Procédé selon une quelconque revendication précédente, dans lequel les propriétés de configuration incluent des coefficients de filtre pour un filtre adaptatif de taux d'échantillonnage.

5. Procédé selon la revendication 4, comprenant en outre :
le chargement des coefficients de filtre dans le filtre adaptatif de taux d'échantillonnage ;
la réalisation d'un réglage fin du filtre adaptatif de taux d'échantillonnage pour générer des coefficients de filtre modifiés sur la base d'au moins un signal d'erreur de rétroaction ; et
la génération du signal antibruit sur la base des coefficients de filtrage modifiés.

6. Procédé selon une quelconque revendication précédente, dans lequel les propriétés de configuration incluent une taille d'incrément d'un système d'annulation active du bruit.

7. Procédé selon une quelconque revendication précédente, dans lequel les signaux de référence sont des sorties échantillonnées provenant d'une pluralité d'accéléromètres dans une fenêtre de référence.

8. Procédé selon une quelconque revendication précédente, comprenant en outre :
la comparaison du vecteur d'espace latent à une limite de décision associée à un groupe de grappe actuel, dans lequel la mise en correspondance du vecteur d'espace latent avec le groupe de grappe est réalisée en réponse au vecteur d'espace latent dépassant la limite de décision.

9. Système (1100) comprenant :
un ou plusieurs processeurs (1101) d'une machine ; et
une mémoire (1120) de stockage d'instructions (1124) qui, lorsqu'elles sont exécutées par les un ou plusieurs processeurs, amènent la machine à réaliser les opérations suivantes :
la réception d'un ensemble de signaux de référence représentant une condition de référence actuelle pour un véhicule, l'ensemble de signaux de référence étant défini en dimensions m ;
la compression de l'ensemble de signaux de référence vers un vecteur d'espace latent étant défini en n dimensions, dans lequel m est supérieur à n ;
la mise en correspondance du vecteur d'espace latent avec un groupe de grappe stocké dans une base de données, le groupe de grappe représentant une condition de référence précédemment rencontrée ;
la récupération de propriétés de configuration associées au groupe de grappe mis en correspondance ; et
la génération d'un signal antibruit sur la base des propriétés de configuration récupérées.

10. Système (1100) selon la revendication 9, dans lequel la compression est réalisée par un codeur de réseau neuronal, et
dans lequel le codeur de réseau neuronal est entraîné hors ligne sur la base d'une architecture d'auto-codeur utilisant un entraînement non supervisé.

11. Système (1100) selon la revendication 10, dans lequel l'architecture d'auto-codeur inclut une portion de codeur avec une couche d'entrée pour recevoir un signal d'entrée, une portion d'espace latent pour compresser le signal d'entrée pour générer un signal compressé, et une portion de décodeur avec une couche de sortie entraînée pour reconstruire le signal d'entrée à partir du signal comprimé.

12. Système (1100) selon l'une quelconque des revendications 9 à 11, dans lequel les propriétés de configuration incluent des coefficients de filtre pour un filtre adaptatif de taux d'échantillonnage.

13. Système (1100) selon la revendication 12, dans lequel les instructions, lorsqu'elles sont exécutées par les un ou plusieurs processeurs (1101), amènent la machine à réaliser les opérations suivantes :
le chargement des coefficients de filtre dans le filtre adaptatif de taux d'échantillonnage ;
la réalisation d'un réglage fin du filtre adaptatif de taux d'échantillonnage pour générer des coefficients de filtre modifiés sur la base d'au moins un signal d'erreur de rétroaction ; et
la génération du signal antibruit sur la base des coefficients de filtrage modifiés.

14. Système (1100) selon l'une quelconque des revendications 9 à 13, dans lequel au moins l'un de ce qui suit s'applique :
(a) les propriétés de configuration incluent une taille d'incrément d'un système d'annulation active du bruit ;
(b) les signaux de référence sont des sorties échantillonnées provenant d'une pluralité d'accéléromètres dans une fenêtre de référence ;
(c) les instructions, lorsqu'elles sont exécutées par les un ou plusieurs processeurs, amènent la machine à comparer le vecteur d'espace latent à une limite de décision associée à un groupe de grappe actuel, dans lequel la mise en correspondance du vecteur d'espace latent avec le groupe de grappe est réalisée en réponse au vecteur d'espace latent dépassant la limite de décision.

15. Support de stockage lisible par ordinateur comprenant des instructions qui, lorsqu'elles sont exécutées par une machine, amènent la machine à réaliser le procédé selon l'une quelconque des revendications 1 à 8.
